# EUROPEAN PATENT APPLICATION

(11) **EP 3 279 092 A1**
(43) Date of publication of application: **07.02.2018**
(21) Application number: 17183835.2
(22) Date of filing: 28.07.2017
(51) Int. Cl.: B64D 37/32, A62C 3/08

(54) **CATALYTIC FUEL TANK INERTING APPARATUS FOR AIRCRAFT**

(30) Priority: 03.08.2016 US 201662370316 P
(71) Applicant: Hamilton Sundstrand Corporation, Windsor Locks, CT 06096-1010 (US)
(72) Inventor: SURAWSKI, Eric, Glastonbury, CT Connecticut 06033 (US)
(74) Representative: Hughes, Andrea Michelle

(57) **Abstract**

Aircraft fuel tank inerting systems and methods are provided. The aircraft fuel tank inerting systems include a fuel tank (202) having fuel (204) therein, an evaporator container (210) fluidly connected to the fuel tank and arranged to receive inerting fuel (208) from the fuel tank, the evaporator container evaporating the inerting fuel to generate a first reactant (216), a second reactant source (220) arranged to supply a second reactant (218), and a catalyst (222) fluidly connected to the evaporator container and arranged to receive the first reactant and the second reactant, wherein the catalyst includes a catalyst material to induce a chemical reaction between the first reactant and the second reactant to generate an inert gas (234), wherein the inert gas is supplied into an ullage (206) of the fuel tank.

## Description

### BACKGROUND OF THE INVENTION

The subject matter disclosed herein generally relates to fuel tank inerting systems for aircraft and, more particularly, to fuel tank inerting systems configured to supply inert gas in an aircraft.

In general, aircraft pneumatic systems including, air conditioning systems, cabin pressurization and cooling, and fuel tank inerting systems are powered by engine bleed air. For example, pressurized air from an engine of the aircraft is provided to a cabin through a series of systems that alter the temperatures and pressures of the pressurized air. To power this preparation of the pressurized air, generally the source of energy is the pressure of the air itself.

The air bled from engines may be used for environmental control systems, such as used to supply air to the cabin and to other systems within an aircraft. Additionally, the air bled from engines may be supplied to inerting apparatuses to provide inert gas to a fuel tank. In other cases, the air may be sourced from compressed RAM air.

Regardless of the source, the air is passed through a porous hollow fiber membrane tube bundle known as an "air separation module." A downstream flow control valve is controlled or passively operating to apply back pressure on the air separation module to force some amount of air through the membrane as opposed to flowing though the tube. Oxygen passes more easily through the membrane, leaving only nitrogen enriched air to continue through the flow control valve into the fuel tank. Typically air separation modules employ a dedicated ram air heat exchanger in conjunction with a bypass valve.

### BRIEF DESCRIPTION OF THE INVENTION

According to some embodiments, aircraft fuel tank inerting systems are provided. The aircraft fuel tank inerting systems include a fuel tank having fuel therein, an evaporator container fluidly connected to the fuel tank and arranged to receive inerting fuel from the fuel tank, the evaporator container evaporating the inerting fuel to generate a first reactant, a second reactant source arranged to supply a second reactant, and a catalyst fluidly connected to the evaporator container and arranged to receive the first reactant and the second reactant, wherein the catalyst includes a catalyst material to induce a chemical reaction between the first reactant and the second reactant to generate an inert gas, wherein the inert gas is supplied into an ullage of the fuel tank.

In addition to one or more of the features described herein, or as an alternative, further embodiments of the aircraft fuel tank inerting systems may include that the second reactant source is a source of gas containing oxygen.

In addition to one or more of the features described herein, or as an alternative, further embodiments of the aircraft fuel tank inerting systems may include that the second reactant source is at least one of (i) bleed air from an aircraft engine, (ii) cabin air, or (iii) high pressure air extracted or bled from an engine.

In addition to one or more of the features described herein, or as an alternative, further embodiments of the aircraft fuel tank inerting systems may include that the evaporator container includes a heater arranged to evaporate the inerting fuel within the evaporator container to generate the first reactant.

In addition to one or more of the features described herein, or as an alternative, further embodiments of the aircraft fuel tank inerting systems may include a controller arranged to supply an amount of inert gas into the ullage of the fuel tank to maintain a higher pressure within the ullage as compared to ambient air pressure during a descent phase of aircraft operation.

In addition to one or more of the features described herein, or as an alternative, further embodiments of the aircraft fuel tank inerting systems may include a heat exchanger arranged downstream from the catalyst and arranged receive a catalyzed mixture from the catalyst wherein a portion of the catalyzed mixture condenses into a byproduct.

In addition to one or more of the features described herein, or as an alternative, further embodiments of the aircraft fuel tank inerting systems may include that the byproduct is water.

In addition to one or more of the features described herein, or as an alternative, further embodiments of the aircraft fuel tank inerting systems may include a water separator positioned downstream from the heat exchanger and arranged to separate the water from the catalyzed mixture.

In addition to one or more of the features described herein, or as an alternative, further embodiments of the aircraft fuel tank inerting systems may include that the heat exchanger receives cooling air from a cool air source.

In addition to one or more of the features described herein, or as an alternative, further embodiments of the aircraft fuel tank inerting systems may include that the catalyst receives cooling air from the cool air source.

In addition to one or more of the features described herein, or as an alternative, further embodiments of the aircraft fuel tank inerting systems may include a fan located downstream from the catalyst and controlled to boost a gas stream pressure of the inert gas.

In addition to one or more of the features described herein, or as an alternative, further embodiments of the aircraft fuel tank inerting systems may include a mixer arranged to mix the first reactant and the second reactant prior to entry into the catalyst.

In addition to one or more of the features described herein, or as an alternative, further embodiments of the aircraft fuel tank inerting systems may include that the mixer is one of a jet pump or an ejector.

In addition to one or more of the features described herein, or as an alternative, further embodiments of the aircraft fuel tank inerting systems may include that the fuel tank is a primary fuel tank of the aircraft, the inerting system comprising at least one additional fuel tank, wherein the inert gas is supplied to a ullage of the at least one additional fuel tank.

In addition to one or more of the features described herein, or as an alternative, further embodiments of the aircraft fuel tank inerting systems may include that the first reactant is vaporized fuel, the second reactant is oxygen-rich air, and the inert gas is a combination of nitrogen and carbon dioxide.

According to some embodiments, methods of supplying inert gas into an ullage of fuel tanks on an aircraft are provided. The methods include generating a first reactant using an evaporator container and supplying said first reactant to a catalyst, supplying a second reactant to the catalyst to induce a chemical reaction between the first reactant and the second reactant to generate an inert gas, and supplying the inert gas into the ullage of the fuel tank.

In addition to one or more of the features described herein, or as an alternative, further embodiments of the methods may include that the second reactant is sourced from at least one of (i) bleed air from an engine of the aircraft, (ii) cabin air, or (iii) high pressure air extracted or bled from an engine.

In addition to one or more of the features described herein, or as an alternative, further embodiments of the methods may include supplying an amount of inert gas into the ullage of the fuel tank to maintain a higher pressure within the ullage as compared to ambient air pressure during a descent phase of aircraft operation.

In addition to one or more of the features described herein, or as an alternative, further embodiments of the methods may include condensing out a byproduct from a catalyze mixture prior to supplying the inert gas into the ullage of the fuel tank.

In addition to one or more of the features described herein, or as an alternative, further embodiments of the methods may include boosting a gas stream pressure of the inert gas to maintain a supply of inert gas into the ullage of the fuel tank.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1A is a schematic illustration of an aircraft that can incorporate various embodiments of the present disclosure;
FIG. 1B is a schematic illustration of a bay section of the aircraft of FIG. 1 A;
FIG. 2 is a schematic illustration of a fuel tank inerting system in accordance with an embodiment of the present disclosure.

### DETAILED DESCRIPTION OF THE INVENTION

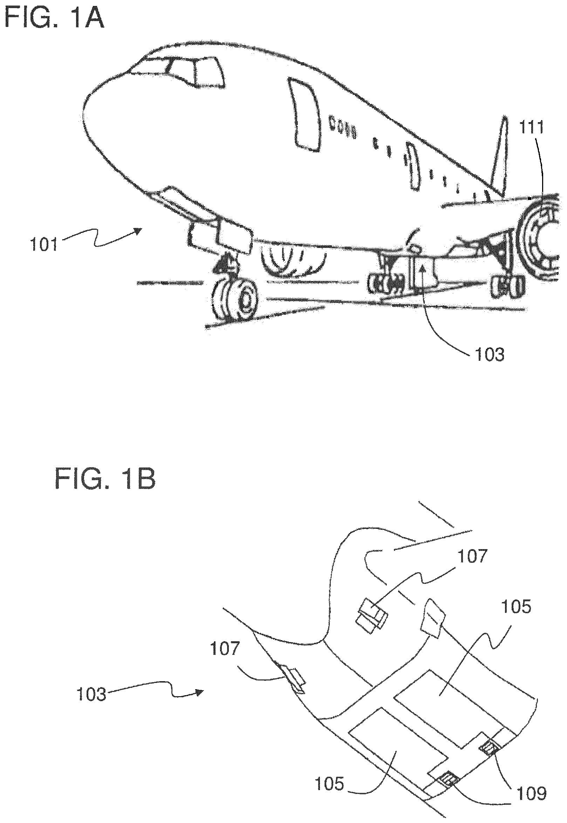

As shown in FIGS. 1A-1B, an aircraft 101 can include one or more bays 103 beneath a center wing box. The bay 103 can contain and/or support one or more components of the aircraft 101. For example, in some configurations, the aircraft 101 can include environmental control systems and/or fuel inerting systems within the bay 103. As shown in FIG. 1B, the bay 103 includes bay doors 105 that enable installation and access to one or more components (e.g., environmental control systems, fuel inerting systems, etc.). During operation of environmental control systems and/or fuel inerting systems of the aircraft 101, air that is external to the aircraft 101 can flow into one or more environmental control systems within the bay doors 105 through one or more ram air inlets 107. The air may then flow through the environmental control systems to be processed and supplied to various components or locations within the aircraft 101 (e.g., passenger cabin, fuel inerting systems, etc.). Some air may be exhaust through one or more ram air exhaust outlets 109.

Also shown in FIG. 1A, the aircraft 101 includes one or more engines 111, The engines 111 are typically mounted on wings of the aircraft 101, but may be located at other locations depending on the specific aircraft configuration. In some aircraft configurations, air can be bled from the engines 111 and supplied to environmental control systems and/or fuel inerting systems, as will be appreciated by those of skill in the art.

As noted above, typical air separation modules operate using pressure differentials to achieve desired air separation. Such systems require a high pressure pneumatic source to drive the separation process across the membrane. Further, the hollow fiber membrane separators commonly used are relatively large in size and weight, which is a significant consideration with respect to aircraft (e.g., reductions in volume and weight of components can improve flight efficiencies). Embodiments provided herein provide reduced volume and/or weight characteristics of air separation modules for aircraft. Further, embodiments provided herein can prevent humid air from entering fuel tanks of the aircraft, thus preventing various problems that may arise with some fuel system components. In accordance with some embodiments of the present disclosure, the typical hollow fiber membrane separator is replaced by a catalytic system (e.g., CO₂ generation system), which can be, for example, smaller, lighter, and/or more efficient than the typical fiber membrane separators. That is, in accordance with embodiments of the present disclosure, the use of hollow fiber membrane separators may be eliminated.

A function of fuel tank flammability reduction systems in accordance with embodiments of the present disclosure is accomplished by reacting a small amount of fuel vapor (e.g., a "first reactant") with a source of gas containing oxygen (e.g., a "second reactant"). The product of the reaction is carbon dioxide and water vapor. The source of the second reactant (e.g., oxygen-rich air) can be bleed air or any other source of air containing oxygen, including, but not limited to, high-pressure sources (e.g., engine), bleed air, cabin air, etc. A catalyst material is used to induce a chemical reaction, including, but not limited to, precious metal materials. The carbon dioxide that results from the reaction is an inert gas that is combined with nitrogen naturally found in fresh/ambient air, and is directed back within a fuel tack to create an inert environment within the fuel tank, thus reducing a flammability of the fuel tank. Further, in some embodiments, the fuel tank flammability reduction or inerting systems of the present disclosure can provide a functionality such that no water vapor enters the fuel tanks during descent stages of flight of an aircraft. This can be accomplished by controlling a flow rate of inert gas into the fuel tank so that a positive pressure is continuously maintained in the fuel tank.

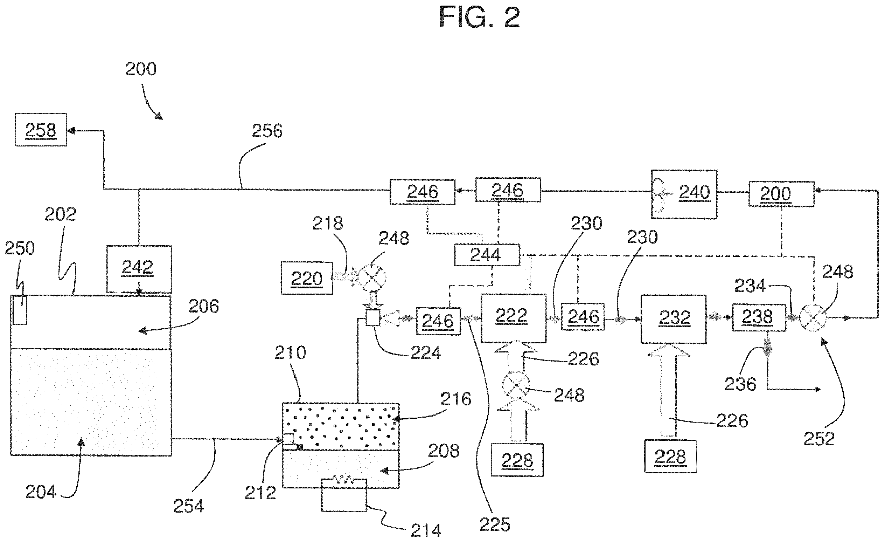

FIG. 2 is a schematic illustration of a flammability reduction or inerting system 200 utilizing a catalytic reaction to produce inert gas in accordance with an embodiment of the present disclosure. The inerting system 200, as shown, includes a fuel tank 202 having fuel 204 therein. As the fuel 204 is consumed during operation of one or more engines, an ullage 206 forms within the fuel tank 202. To reduce flammability risks associated with vaporized fuel that may form within the ullage 206, an inert gas can be generated and fed into the ullage 206.

In accordance with embodiments of the present disclosure, an inerting fuel 208 can be extracted from the fuel tank 202 and into an evaporator container 210. The amount of fuel 204 that is extracted into the evaporator container 210 (i.e., the amount of inerting fuel 208) can be controlled by an evaporator container valve 212, such as a float valve. The inerting fuel 208, which may be in liquid form when pulled from the fuel tank 202, can be vaporized within the evaporator container 210 using a heater 214, such as an electric heater, to generate a first reactant 216. The first reactant 216 is a vaporized portion of the inerting fuel 208 located within the evaporator container 210. The first reactant 216 is mixed with a second reactant 218 which is sourced from a second reactant source 220. The second reactant 218 is oxygen-rich air that is catalyzed with the first reactant 216 to generate an inert gas to be supplied into the ullage 206 of the fuel tank 202. The second reactant 218 can come from any source on an aircraft that is at a pressure greater than ambient, including, but not limited to bleed air from an engine, cabin air, high pressure air extracted or bled from an engine, etc. (i.e., any second reactant source 220 can take any number of configurations and/or arrangements). The first reactant 216 within the evaporator container 210 and the second reactant 218 can be directed into a catalyst 222 by and/or through a mixer 224, which, in some embodiments, may be an ejector or jet pump. The mixer 224 will mix the first and second reactants 216, 218 into a mixed air stream 225.

The catalyst 222 can be temperature controlled to ensure a desired chemical reaction efficiency such that an inert gas can be efficiently produced by the inerting system 200 from the mixed air stream 225. Accordingly, cooling air 226 can be provided to the catalyst 222 to achieve a desired thermal condition for the chemical reaction within the catalyst 222. The cooling air 226 can be sourced from a cool air source 228. A catalyzed mixture 230 leaves the catalyst 222 and is passed through a heat exchanger 232. The heat exchanger 232 operates as a condenser on the catalyzed mixture 230 to separate out an inert gas 234 and a byproduct 236. A cooling air is supplied into the heat exchanger 232 to achieve the condensing functionality. In some embodiments, as shown, a cooling air 226 can be sourced from the same cool air source 228 as that provided to the catalyst 222, although in other embodiments the cool air sources for the two components may be different. The byproduct 236 may be water vapor, and thus in the present configuration shown in FIG. 2, a water separator 238 is provided downstream of the heat exchanger 232 to extract the water vapor from the catalyzed mixture 230, thus leaving only the inert gas 234 to be provided to the ullage 206 of the fuel tank 202.

The inerting system 200 can include additional components including, but not limited to, a fan 240, a flame arrestor 242, and a controller 244. Various other components can be included without departing from the scope of the present disclosure. Further, in some embodiments, certain of the included components may be optional and/or eliminated. For example, in some arrangements, the fan 240 and/or the water separator 238 can be omitted. The controller 244 can be in operable communication with one or more sensors 246 and valves 248 to enable control of the inerting system 200.

In one non-limiting example, flammability reduction is achieved by the inerting system 200 by utilizing the catalyst 222 to induce a chemical reaction between oxygen (second reactant 218) and fuel vapor (first reactant 216) to produce carbon dioxide (inert gas 234) and water in vapor phase (byproduct 236). The source of the second reactant 218 (e.g., oxygen) used in the reaction can come from any source on the aircraft that is at a pressure greater than ambient. The fuel vapor (first reactant 216) is created by draining a small amount of fuel 204 from the fuel tank 202 (e.g., a primary aircraft fuel tank) into the evaporator container 210. The inerting fuel 208 within the evaporator container 210 is heated using the electric heater 214. In some embodiments, the first reactant 216 (e.g., fuel vapor) is removed from the evaporator container 210 by using the mixer 224 to induce a suction pressure that pulls the first reactant 216 out of the evaporator container 210. The mixer 224, in such embodiments, utilizes the elevated pressure of the second reactant source 220 to induce a secondary flow within the mixer 224 which is sourced from the evaporator container 210. Further, as noted above, the mixer 224 is used to mix the two gas streams (first and second reactants 216, 218) together to form the mixed air stream 225.

The mixed air stream 225 (e.g., fuel vapor and oxygen or air) is then introduced to the catalyst 222, inducing a chemical reaction that transforms the mixed air stream 225 (e.g., separates) into the inert gas 234 and the byproduct 236 (e.g., carbon dioxide and water vapor). It is noted that any other gas species that are present in the mixed air stream 225 (for example, nitrogen) will not react and will thus pass through the catalyst 222 unchanged. In some embodiments, the catalyst 222 is in a form factor that acts as a heat exchanger. For example, one non-limiting configuration may be a plate fin heat exchanger wherein the hot side of the heat exchanger would be coated with the catalyst material. Those of skill in the art will appreciate that various types and/or configurations of heat exchangers may be employed without departing from the scope of the present disclosure. The cold side of the catalyst heat exchanger can be fed with the cooling air 226 from the cool air source 228 (e.g., ram air or some other source of cold air). The air through the cold side of the catalyst heat exchanger can be controlled such that the temperature of the hot mixed gas stream 225 is hot enough to sustain the chemical reaction desired within the catalyst 222, but cool enough to remove the heat generated by the exothermic reaction, thus maintaining aircraft safety and materials from exceeding maximum temperature limits.

As noted above, the chemical reaction process within the catalyst 222 can produce byproducts, including water in vapor form. It may be undesirable to have water (in any form) enter the fuel tank 202. Accordingly, water byproduct 236 can be removed from the product gas stream (i.e., inert gas 234) through condensation. To achieve this, catalyzed mixture 230 enters the heat exchanger 232 that is used to cool the catalyzed mixture 230 such that the byproduct 236 can be removed (e.g., a majority of the water vapor condenses and drops out of the catalyzed mixture 230). The byproduct 236 (e.g., liquid water) can then be drained overboard. An optional water separator 238 can be used to accomplish this function.

A flow control valve 248 located downstream of the heat exchanger 232 and optional water separator 238 can meter the flow of the inert gas 234 to a desired flow rate. An optional boost fan 240 can be used to boost the gas stream pressure of the inert gas 234 to overcome a pressure drop associated with ducting between the outlet of the heat exchanger 232 and the discharge of the inert gas 234 into the fuel tank 202. The flame arrestor 242 at an inlet to the fuel tank 202 is arranged to prevent any potential flames from propagating into the fuel tank 202.

Typically, independent of any aircraft flammability reduction system(s), aircraft fuel tanks (e.g., fuel tank 202) need to be vented to ambient. Thus, as shown in FIG. 2, the fuel tank 202 includes a vent 250. At altitude, pressure inside the fuel tank 202 is very low and is roughly equal to ambient pressure. During descent, however, the pressure inside the fuel tank 202 needs to rise to equal ambient pressure at sea level (or whatever altitude the aircraft is landing at). This requires gas entering the fuel tank 202 from outside to equalize the pressure. When air from outside enters the fuel tank 202, water vapor can be carried by the ambient air into the fuel tank 202. To prevent water/water vapor from entering the fuel tank 202, the inerting system 200 can repressurize the fuel tank 202 with the inert gas 234 generated by the inerting system 200. This is accomplished by using the valves 248. For example, one of the valves 248 may be a flow control valve 252 that is arranged fluidly downstream from the catalyst 222. The flow control valve 252 can be used to control the flow of inert gas 234 into the fuel tank 202 such that a slightly positive pressure is always maintained in the fuel tank 202. Such positive pressure can be prevent ambient air from entering the fuel tank 202 from outside during descent and therefore prevent water from entering the fuel tank 202.

As noted above, the controller 244 can be operably connected to the various components of the inerting system 200, including, but not limited to, the valves 248 and the sensors 246. The controller 244 can be configured to receive input from the sensors 246 to control the valves 248 and thus maintain appropriate levels of inert gas 234 within the ullage 206. Further, the controller 244 can be arranged to ensure an appropriate amount of pressure within the fuel tank 202 such that, during a descent of an aircraft, ambient air does not enter the ullage 206 of the fuel tank 202.

In some embodiments, the inerting system 200 can supply inert gas to multiple fuel tanks on an aircraft. As shown in the embodiment of FIG. 2, an inerting supply line 254 fluidly connects the fuel tank 202 to the evaporator container 210. After the inert gas 234 is generated, the inert gas 234 will flow through a fuel tank supply line 256 to supply the inert gas 234 to the fuel tank 202 and, optionally, additional fuel tanks 258, as schematically shown.

Advantageously, embodiments of the present disclosure provide efficient mechanisms for generating inert gas and supplying such inert gas into fuel tanks of aircraft. Further, advantageously, embodiments provided herein can prevent ambient air (possibly containing water) from entering an aircraft fuel tank. To prevent ambient air from entering the aircraft fuel tank, a controller of an inerting system as described herein, can supply inert gas into the fuel tank to maintain a desired pressure (e.g., providing a higher pressure within the fuel tank than ambient pressures). Such increased pressure can be employed within the fuel tank to prevent ingress of oxygen-rich air (e.g., ambient air). This may be particularly useful during a descent phase of flight of an aircraft as the ambient pressures increase as the altitude decreases.

While the invention has been described in detail in connection with only a limited number of embodiments, it should be readily understood that the invention is not limited to such disclosed embodiments. Rather, the invention can be modified to incorporate any number of variations, alterations, substitutions, combinations, sub-combinations, or equivalent arrangements not heretofore described, but which are commensurate with the scope of the invention as defined by the claims. Additionally, while various embodiments of the invention have been described, it is to be understood that aspects of the invention may include only some of the described embodiments.

Accordingly, the present disclosure is not to be seen as limited by the foregoing description, but is only limited by the scope of the appended claims.

## Claims

1. An aircraft fuel tank inerting system, the aircraft fuel tank inerting system comprising:
a fuel tank (202) having fuel (204) therein;
an evaporator container (210) fluidly connected to the fuel tank and arranged to receive inerting fuel from the fuel tank, the evaporator container evaporating the inerting fuel to generate a first reactant (216);
a second reactant source (220) arranged to supply a second reactant (218); and
a catalyst (222) fluidly connected to the evaporator container and arranged to receive the first reactant and the second reactant, wherein the catalyst includes a catalyst material to induce a chemical reaction between the first reactant and the second reactant to generate an inert gas (234), wherein the inert gas is supplied into an ullage of the fuel tank.

2. The aircraft fuel tank inerting system of claim 1, wherein the second reactant source is a source of gas containing oxygen, preferably, wherein the second reactant source is at least one of (i) bleed air from an aircraft engine, (ii) cabin air, or (iii) high pressure air extracted or bled from an engine.

3. The aircraft fuel tank inerting system of any preceding claim, wherein the evaporator container includes a heater arranged to evaporate the inerting fuel within the evaporator container to generate the first reactant.

4. The aircraft fuel tank inerting system of any preceding claim, further comprising a controller (244) arranged to supply an amount of inert gas into the ullage of the fuel tank to maintain a higher pressure within the ullage as compared to ambient air pressure during a descent phase of aircraft operation.

5. The aircraft fuel tank inerting system of any preceding claim, further comprising a heat exchanger (232) arranged downstream from the catalyst and arranged receive a catalyzed mixture (230) from the catalyst wherein a portion of the catalyzed mixture condenses into a byproduct (236).

6. The aircraft fuel tank inerting system of claim 5, wherein the byproduct is water, preferably, the system further comprising a water separator (238) positioned downstream from the heat exchanger and arranged to separate the water from the catalyzed mixture.

7. The aircraft fuel tank inerting system of claim 5, wherein the heat exchanger receives cooling air (226) from a cool air source (228), preferably, wherein the catalyst receives cooling air from the cool air source.

8. The aircraft fuel tank inerting system of any preceding claim, further comprising a fan (240) located downstream from the catalyst and controlled to boost a gas stream pressure of the inert gas.

9. The aircraft fuel tank inerting system of any preceding claim, further comprising a mixer (224) arranged to mix the first reactant and the second reactant prior to entry into the catalyst, preferably, wherein the mixer is one of a jet pump or an ejector.

10. The aircraft fuel tank inerting system of any preceding claim, wherein the fuel tank is a primary fuel tank of the aircraft, the inerting system comprising at least one additional fuel tank, wherein the inert gas is supplied to a ullage of the at least one additional fuel tank.

11. The aircraft fuel tank inerting system of any preceding claim, wherein the first reactant is vaporized fuel, the second reactant is oxygen-rich air, and the inert gas is a combination of nitrogen and carbon dioxide.

12. A method of supplying an inert gas into an ullage of a fuel tank on an aircraft, the method comprising:
generating a first reactant using an evaporator container and supplying said first reactant to a catalyst;
supplying a second reactant to the catalyst to induce a chemical reaction between the first reactant and the second reactant to generate an inert gas; and
supplying the inert gas into the ullage of the fuel tank,
preferably, wherein the second reactant is sourced from at least one of (i) bleed air from an engine of the aircraft, (ii) cabin air, or (iii) high pressure air extracted or bled from an engine..

13. The method of claim 12, further comprising supplying an amount of inert gas into the ullage of the fuel tank to maintain a higher pressure within the ullage as compared to ambient air pressure during a descent phase of aircraft operation.

14. The method of claim 12, further comprising condensing out a byproduct from a catalyze mixture prior to supplying the inert gas into the ullage of the fuel tank.

15. The method of claim 12, further comprising boosting a gas stream pressure of the inert gas to maintain a supply of inert gas into the ullage of the fuel tank.
